(19)

**Europäisches Patentamt**

**European Patent Office**

**Office européen des brevets**

(11) **EP 4 432 216 A1**

(12) **EUROPEAN PATENT APPLICATION**

(43) Date of publication:
**18.09.2024 Bulletin 2024/38**

(21) Application number: **23020304.4**

(22) Date of filing: **21.06.2023**

(51) International Patent Classification (IPC):
**G06T 5/00** *(2024.01)*  **G06T 5/20** *(2006.01)*
**G06T 5/30** *(2006.01)*  **G06T 7/00** *(2017.01)*
**G06T 7/64** *(2017.01)*  *G01N 21/64* *(2006.01)*
**G02B 21/00** *(2006.01)*

(52) Cooperative Patent Classification (CPC):
**G06T 5/70; G02B 21/16; G02B 21/367; G06T 5/30;**
**G06T 5/73; G06T 7/0012; G06T 7/64;**
G01N 21/6458; G06T 2207/10056;
G06T 2207/10064; G06T 2207/30024

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.03.2023 CN 202310268073**

(71) Applicant: **Konfoong Biotech International Co. Ltd.**
**Ningbo (CN)**

(72) Inventors:
- **Liu, Bingxian**
 **Ningbo, 315000 (CN)**
- **Xie, Juyan**
 **Ningbo, 315000 (CN)**
- **Wang, Yanhui**
 **Ningbo, 315000 (CN)**
- **Wang, Kehui**
 **Ningbo, 315000 (CN)**
- **Huang, Tao**
 **Ningbo, 315000 (CN)**

(74) Representative: **Reichert & Lindner**
**Partnerschaft Patentanwälte**
**Kaflerstrasse 15**
**81241 München (DE)**

(54) **IMAGE ENHANCEMENT METHOD AND WIDEFIELD FLUORESCENCE IMAGING SYSTEM**

(57) This present invention relates to the field of image processing technology, especially to an image enhancement method and a widefield fluorescence imaging system, comprising: arranging fluorescent microspheres on an image plane of widefield fluorescence microscopy, and collecting, by the widefield fluorescence microscopy, the microsphere images of the fluorescent microspheres; processing, by the computer equipment, the microsphere image, to obtain the half-peak full width value of the fluorescent microspheres; constructing a point diffusion model based on the half-peak full width value in computer equipment; collecting a sample image by the widefield fluorescence microscope, and then processing, by the computer device, the sample image based on a point diffusion model to obtain an enhanced image. The beneficial effect is that by detecting the half-peak full width value of the fluorescent microspheres and using it in the construction process of the point diffusion model, the processing process is simplified and the processing efficiency is improved while achieving better imaging results.

Step S1: arranging fluorescent microspheres on an image plane of wide field fluorescence microscopy, and collecting, by the widefield fluorescence microscopy, the microsphere image of the fluorescent microspheres — S1

Step S2: processing, by the computer equipment, the microsphere image, to obtain the half-peak full width value of the fluorescent microspheres — S2

Step S3: constructing a point diffusion model based on the half-peak full width value in a computer equipment — S3

Step S4: collecting a sample image by the widefield fluorescence microscope, and then processing, by the computer equipment, the sample images based on the point diffusion model to obtain an enhanced image — S4

Figure 2

EP 4 432 216 A1

## EP 4 432 216 A1

**Description**

**BACKGROUND OF THE INVENTION**

**1. Field of the Invention**

This present invention relates to the field of image processing technology, especially to an image enhancement method and a widefield fluorescence imaging system.

**2. Description of the Related Art**

Spot diffusion models are used to describe the impulse response of an optical system, play an important role in measuring the imaging quality of the system, and are widely used in fluorescence microscopy imaging, deconvolutional 3D reconstruction, Fourier optics and other fields. Widefield fluorescence imaging system exposes the entire sample on the microscope stage to a light source and excites the fluorescence reaction in the sample through the light source, to capture clear microscopic images. However, limited by the optical structure of the fluorescence microscopy imaging system itself, it often leads to blurry and noisy parts of the image when used, which affects the imaging quality.

In the existing technologies, there are technical solutions for image enhancement using point diffusion model for widefield fluorescence imaging system. For example, Chinese patent CN 201711352724.2 discloses a point diffusion model measurement method and system for widefield fluorescence microscopy, the scheme obtains the three-dimensional light field distribution of fluorescent globules by taking the focal stack image of the fluorescent globule, so as to calculate the three-dimensional point diffusion model of the widefield fluorescence microscope, and the three-dimensional point diffusion model can be used to restore the collected fluorescence image during actual imaging to obtain better imaging quality.

However, in the actual implementation, the inventor found that in the above process, due to the need to obtain the three-dimensional light field distribution of the fluorescent globules, and convert them into a two-dimensional point diffusion model at each defocusing distance, and then process it into a three-dimensional point diffusion model based on the energy ratio of the fluorescent globules at each distance. This process is relatively lengthy and inefficient.

**SUMMARY OF THE INVENTION**

In view of the above problems existing in the prior art, an image enhancement method is provided. On the other hand, a widefield fluorescence imaging system that applies this image enhancement method is also available.

The specific technical solutions are as follows:

An image enhancement method for widefield fluorescence imaging systems comprising a widefield fluorescence microscope and a computer equipment connected to the widefield fluorescence microscope, the method comprising:

   arranging fluorescent microspheres on an image plane of the widefield fluorescence microscope, and collecting, by the widefield fluorescence microscope, the microsphere image of the fluorescent microspheres;

   processing, by the computer equipment, the microsphere image, to obtain the half-peak full width value of the fluorescent microspheres;

   constructing a point diffusion model based on the half-peak full width value in the computer equipment;

   collecting a sample image by the widefield fluorescence microscope, and then processing, by the computer equipment, the sample image based on the point diffusion model to obtain an enhanced image.

On the other hand, before arranging the fluorescent microspheres, the widefield fluorescence microscope collects a background image on the image plane;

after collecting, by the widefield fluorescence microscope, the microsphere image, the computer equipment outputs the microsphere image after noise removal based on the background image.

On the other hand, in the process of collecting microsphere images by the widefield fluorescence microscope, the widefield fluorescence microscope collects a plurality of fluorescence images on the fluorescent microspheres in turn;

   the computer equipment receives each of the fluorescence images in turn;

   the computer equipment averages all of the fluorescence images and outputs a microsphere image.

On the other hand, the process of processing the microsphere image by the computer equipment further comprises:

performing morphological processing, by the computer equipment, on the microsphere image to obtain a preprocessed image;

screening, by the computer equipment, the fluorescent microspheres from the preprocessed image, to obtain target microspheres;

generating, by the computer equipment, the half-peak full width value according to the image data of the target microspheres.

On the other hand, the process of screening, by the computer equipment, the fluorescent microspheres further comprises:

performing, by the computer equipment, a detection of connectivity domain on the preprocessed image to obtain a plurality of connectivity domains, and removing, according to the connectivity domain, the adjacent fluorescent microspheres;

generating, by the computer equipment, a roundness of each of the fluorescent microspheres after screening;

comparing, by the computer equipment, the roundnesses with a pre-set roundness threshold to remove the fluorescent microspheres whose roundness is less than the roundness threshold;

outputting, by the computer equipment, the screened fluorescent microspheres to function as the target microspheres.

On the other hand, the process of generating the half-peak full width value by the computer equipment according to the image data comprises:

performing, by the computer equipment, a nonlinear least squares fitting to the image data of each of the target microspheres to obtain the half-peak full width value of the fluorescent microspheres;

averaging, by the computer equipment, all of the half-peak full width value of the fluorescent microspheres to obtain the half-peak full width value.

On the other hand, the process of processing the sample image by the computer equipment comprises:

processing, by the computer equipment, the sample image based on the point diffusion model to obtain an intermediate image of this iteration;

generating, by the computer equipment, the evaluation result of this iteration according to the intermediate image, the point spread function, and the sample image;

determining, by the computer equipment, whether the intermediate image meets a preconfigured iteration condition;

if yes, outputting, by the computer equipment, the intermediate image to function as the enhanced image;

if not, processing, by the computer equipment, the intermediate image based on the point diffusion model to obtain an intermediate image of next iteration.

A widefield fluorescence imaging system applying the image enhancement method described above, comprising:

the widefield fluorescence microscope, for collecting the sample image;

computer equipment, connected to the widefield fluorescence microscope, the computer equipment receives the sample image and processes the sample image based on the image enhancement method to obtain the enhanced image.

On the other hand, the computer equipment comprises:

a model building module, the model building module constructs the point diffusion model according to the microsphere image collected by the widefield fluorescence microscope;

the image enhancement module, the image enhancement module is connected to the model building module, and the image enhancement module processes the sample image according to the point diffusion model to obtain the enhanced image.

On the other hand, the image enhancement module is provided with an iterative submodule, and the iterative submodule iterates the sample image according to the point diffusion model, to obtain the enhanced image.

The above technical solutions have the following advantages or beneficial effects:

in view of the relatively complex processing process of fluorescence imaging system in the existing technology, which mainly relies on detecting the three-dimensional light field distribution of each fluorescent microsphere during the calibration process, the scheme of the invention detects the half-peak full width value of the fluorescent microspheres and is used in the construction process of the point diffusion model, so as to achieve better imaging results, simplify the processing process and improve the processing efficiency.

**BRIEF DESCRIPTION OF THE DRAWINGS**

Refer to the accompanying drawings to more fully describe embodiments of the present invention. However, the attached drawings are for illustrative and elaboration only and do not constitute a limitation on the scope of the invention.

FIG. 1 is a schematic diagram of a widefield fluorescence imaging system applicable to an embodiment of the present invention;
FIG. 2 is an image enhancement method flowchart of an embodiment of the present invention;
FIG. 3 is a schematic diagram of a slide in an embodiment of the present invention;
FIG. 4 is a schematic diagram of the substep of step S1 in an embodiment of the present invention;
FIG. 5 is a schematic diagram of the substep of step S2 in an embodiment of the present invention;
FIG. 6 is a schematic diagram of the substep of step S22 in an embodiment of the present invention;
FIG. 7 is a schematic diagram of the substep of step S23 in an embodiment of the present invention;
FIG. 8 is a schematic diagram of the substep of step S4 in an embodiment of the present invention;
FIG. 9 is a schematic diagram of the substep of step S43 in an embodiment of the present invention;
FIG. 10 is an input sample image in an embodiment of the present invention;
FIG. 11 is an enhanced image obtained by processing based on sample image in an embodiment of the present invention;
FIG. 12 is a schematic diagram of a widefield fluorescence imaging system in an embodiment of the present invention;
FIG. 13 is a schematic diagram of a computer equipment in an embodiment of the present invention.

**DETAILED DESCRIPTION**

The following will be combined with the accompanying drawings in the embodiments of the present invention, the technical solution in the embodiments of the present invention is clearly and completely described, obviously, the described embodiments are only a part of, not all of, the embodiments of the present invention. Based on the embodiments in the present invention, all other embodiments obtained by those skilled in the art without performing creative labor, fall within the scope of the protection of the present invention.

It should be noted that, without conflict, embodiments in the present invention and the features in embodiments may be combined with each other.

The present invention is further described below in conjunction with the accompanying drawings and specific embodiments, but is not used as a limitation of the present invention. The present invention comprises:

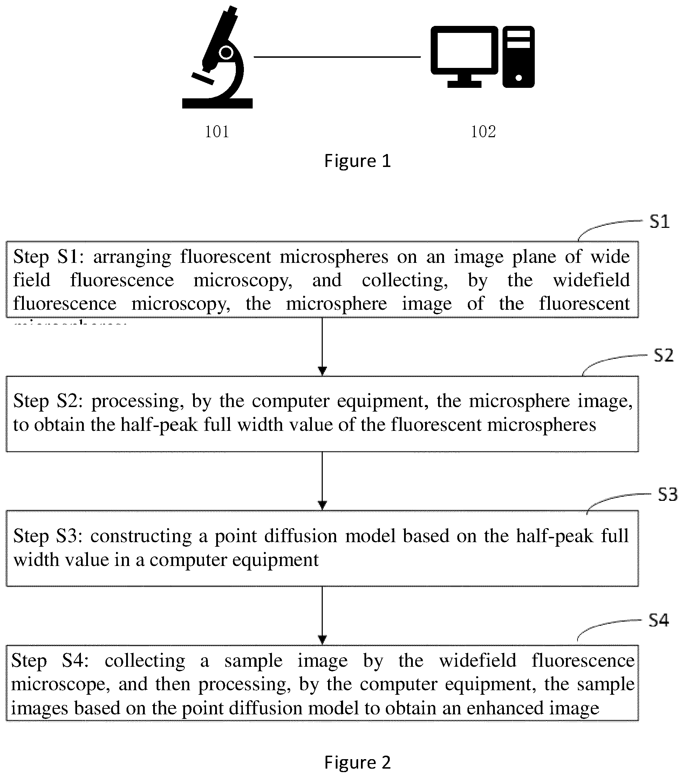

an image enhancement method used for a widefield fluorescence imaging system shown in Figure 1, the widefield fluorescence imaging system mainly includes a fluorescence microscope 101 for collecting fluorescence images and a computer equipment 102 for processing the collected images. The computer equipment 102 is preconfigured with a computer program for executing the construction method, and for image processing of the digital image output by the fluorescence microscope 101, comprising image restoration based on the point diffusion model, processing and displaying the image based on other feasible image processing methods.

In the widefield fluorescence imaging system described above, as shown in Figure 2, the image enhancement method comprises:

Step S1: arranging fluorescent microspheres on an image plane of widefield fluorescence microscopy, and collecting, by the widefield fluorescence microscopy, the microsphere image of the fluorescent microspheres;
Step S2: processing, by the computer equipment, the microsphere image, to obtain the half-peak full width value of the fluorescent microspheres;
Step S3: constructing a point diffusion model based on the half-peak full width value in a computer equipment;
Step S4: collecting a sample image by the widefield fluorescence microscope, and then processing, by the computer equipment, the sample images based on the point diffusion model to obtain an enhanced image.

Specifically, in view of the relatively lengthy and inefficient measurement methods of point diffusion model in the prior art, the inventors found, after researching the application scenarios of the fluorescence imaging system, that the current fluorescence imaging system, when used for image collection of tissue section sample, the slides are usually fixed on the image plane of the fluorescence microscope. This allows the construction process of the point diffusion model to be further simplified without relying on the light field distribution of the fluorescent globules in three-dimensional space. In this regard, in the present embodiment, by changing the construction process of the point diffusion model, the microsphere image of the fluorescent microsphere is directly collected on the image plane, and the microsphere image is processed to obtain the half-peak full width value. Subsequently, the point diffusion model is directly generated based on the half-peak full width value, which reduces the relatively cumbersome steps in the existing technology such as finding the three-dimensional light field distribution of the fluorescent globules and calculating the energy of the fluorescent globules at each defocusing distance, and achieves better calculation efficiency.

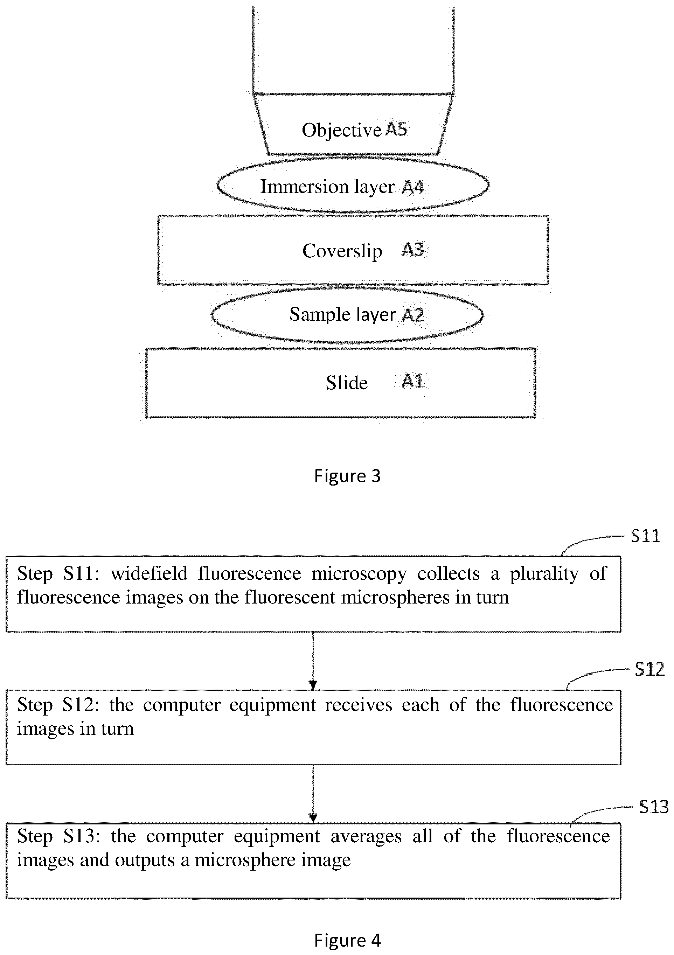

In the process of implementation, the fluorescent microspheres are commercially available small spheres treated with fluorescent staining. For example, in one embodiment, a polystyrene microsphere filled with a fluorescent dye is selected, with a diameter of 100 nm, which can produce a fluorescence reaction under the irradiation of a laser source of a specific wavelength. Prior to Step S1, these fluorescent microspheres have been pre-fabricated into fluorescent microsphere slides, and the production process can refer to the prior art and will not be repeated here. When the slide is placed on the stage, its structure is shown in Figure 3, with immersion layer A4 provided between objective A5 and coverslip A3, and sample layer A2 used to house fluorescent microspheres between slide A1 and coverslip A3. The microsphere image is a digital image collected and output by the fluorescence microscope 101 in this state when executing the fluorescence excitation, and the computer equipment 102 receives the microsphere image and processes it, so as to obtain a point diffusion model.

In one embodiment, before arranging the fluorescent microspheres, a widefield fluorescence microscope is also used to collect a background image on the image plane;
after collecting, by the widefield fluorescence microscope, the microsphere image, the computer equipment outputs the microsphere image after noise removal based on the background image.

Specifically, in view of the problem that during the use of the widefield fluorescence imaging system, there may be certain noise due to its own optical structure, which in turn affects the construction of the point diffusion model, in the present embodiment, the background image is collected through the image plane in advance, before arranging the fluorescent microspheres on the stage. At this time, the light source of the fluorescence microscope 101 remains in the working state, thereby obtaining a background image in the non-excited fluorescence state. This part of the background image contains some background noise. Subsequently, after the microsphere image is collected, the background noise is removed by subtracting the microsphere image from the background image.

In one embodiment, as shown in Figure 4, the process of collecting, by the widefield fluorescence microscope, microsphere image further comprises,

Step S11: widefield fluorescence microscopy collects a plurality of fluorescence images on the fluorescent microspheres in turn;
Step S12: the computer equipment receives each of the fluorescence images in turn;
Step S13: the computer equipment averages all of the fluorescence images and outputs a microsphere image.

As an optional embodiment, before performing step S13, the computer equipment also outputs the maximum and minimum values of the fluorescence images.

Specifically, to avoid the problem of collection error, in this embodiment, after arranging the fluorescence microspheres, by repeatedly collecting fluorescence images at the same location, and then removing the maximum and minimum values, and then performing average filtering, the microsphere image is generated, and a better denoising effect is achieved.

As an optional embodiment, the background image is processed in the same way.

As an optional embodiment, when the microsphere image is collected, the microsphere image is binarized to obtain a binarized microsphere image, thereby reducing the amount of data to be processed later.

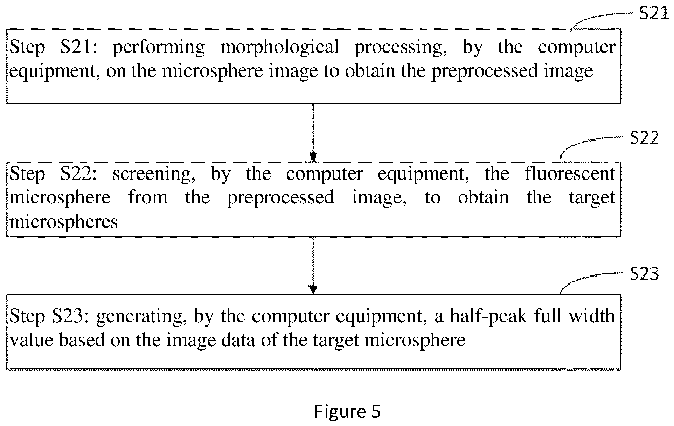

In one embodiment, as shown in Figure 5, the process of processing the microsphere image by the computer equipment further comprises:

Step S21: performing morphological processing, by the computer equipment, on the microsphere image to obtain the preprocessed image;
Step S22: screening, by the computer equipment, the fluorescent microspheres from the preprocessed image, to obtain the target microspheres;
Step S23: generating, by the computer equipment, a half-peak full width value based on the image data of the target microsphere.

Specifically, in order to achieve a more accurate construction effect on the point diffusion model, in the present embodiment, when the microsphere image is collected, the image is further processed by morphological processing, so that the part of the fluorescent microspheres in the image is clearer. Subsequently, in order to avoid the change of light intensity distribution caused by some fluorescent microspheres with irregular shape, close proximity and adhesion phenomenon, the fluorescent microspheres are further screened to obtain the target microspheres, and the target microspheres are only used to generate the half-peak full width value, so as to achieve a more accurate calculation effect.

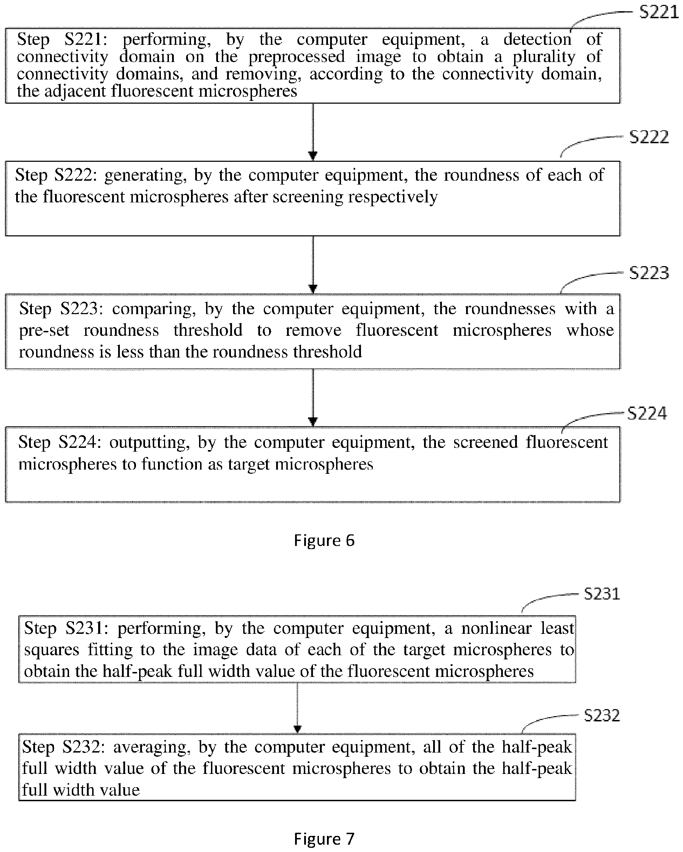

In one embodiment, as shown in Figure. 6, the process of screening fluorescent microspheres by a computer equipment further comprises:

Step S221: performing, by the computer equipment, a detection of connectivity domain on the preprocessed image to obtain a plurality of connectivity domains, and removing, according to the connectivity domain, the adjacent fluorescent microspheres;
Step S222: generating, by the computer equipment, the roundness of each of the fluorescent microspheres after screening respectively;
Step S223: comparing, by the computer equipment, the roundnesses with a pre-set roundness threshold to remove fluorescent microspheres whose roundness is less than the roundness threshold;
Step S224: outputting, by the computer equipment, the screened fluorescent microspheres to function as target microspheres.

Specifically, in order to achieve a better screening effect on fluorescent microspheres, in the present embodiment, a plurality of connectivity domains in the preprocessed image is first obtained by means of connectivity domain detection. For the generated connectivity domain, it may contain an area formed by a single fluorescent microsphere and a region formed by a plurality of adjacent fluorescent microspheres. At this time, the adjacent fluorescent microspheres that are close or even adhered are eliminated by identifying the area of each of the connectivity domains. Then, for each of the fluorescent microspheres retained, the aspect ratio is calculated to generate the roundness, respectively, and the roundness is compared with the roundness threshold to eliminate irregularly shaped fluorescent microspheres, so that the light intensity distribution of the target microspheres can meet the expectations.

In an embodiment, as shown in Figure 7, the process of generating the half-peak full width values by the computer equipment according to the image data comprises:

Step S231: performing, by the computer equipment, a nonlinear least squares fitting to the image data of each of the target microspheres to obtain the half-peak full width value of the fluorescent microspheres.
Step S232: averaging, by the computer equipment, all of the half-peak full width value of the fluorescent microspheres to obtain the half-peak full width value.

Specifically, in order to achieve a better generation effect on the half-peak full width value, in the present embodiment, for each of the screened target microspheres, the image data of each of the target microspheres is subject to a nonlinear least squares fitting, so as to obtain the half-peak full width value of each of the microspheres. Subsequently, the average value of all of the half-peak full width values is taken to output as the half-peak full width value, so as to achieve a better calculation effect.

In one embodiment, the point diffusion model comprises:

$$h(x, y) = \left\{ \frac{2J_1 \left[ \frac{1.024\pi}{F_{psf}} \sqrt{(x-x_0)^2 + (y-y_0)^2} \right]}{\frac{1.024\pi}{F_{psf}} \sqrt{(x-x_0)^2 + (y-y_0)^2}} \right\}^2$$

In the formula, $h(x, y)$ is point diffusion model, $J_1$ is a first type of first-order Bezier function, $F_{psf}$ is half-peak full width value, $(x_0, y_0)$ is the central coordinate of the point diffusion model, $(x, y)$ is the object of the coordinates of the point diffusion model in which the object is to be detected.

Specifically, aiming at the relatively long construction process of point diffusion model in prior art, in this embodiment, by selecting the first type of first-order Bezier point diffusion model as the point diffusion model of the current fluorescence imaging system, thus, the fluorescence imaging system can directly realize the construction process of the point diffusion model according to the input half-peak full width value, so as to improve the processing efficiency.

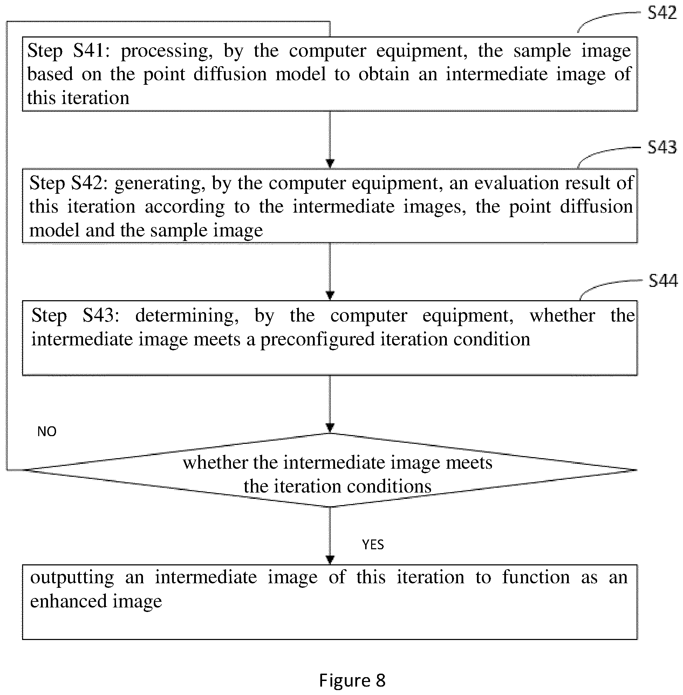

In an embodiment, as shown in Figure 8, the process of processing sample images by the computer equipment comprises:

Step S41: processing, by the computer equipment, the sample image based on the point diffusion model to obtain an intermediate image of this iteration;

Step S42: generating, by the computer equipment, an evaluation result of this iteration according to the intermediate images, the point diffusion model and the sample image;

Step S43: determining, by the computer equipment, whether the intermediate image meets a preconfigured iteration condition;

If so, outputting, by the computer equipment, an intermediate image to function as an enhanced image;

If not, processing, by the computer equipment, the intermediate image based on the point diffusion model to obtain an intermediate image of next iteration.

Specifically, in order to achieve a better iterative effect on the point diffusion model, in the present embodiment, for the input sample image, perform an image enhancement processing based on the existing point diffusion model to obtain an intermediate image. The specific steps of the image enhancement processing are prior art. Subsequently, the intermediate image, point diffusion model and sample image are processed to obtain the evaluation results of this iteration.

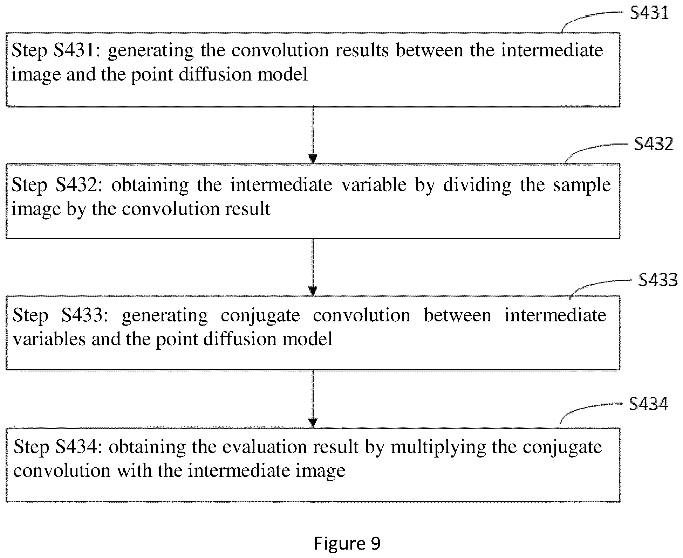

Specifically, as shown in Figure 9, this calculation step consists of:

Step S431: generating the convolution results between the intermediate image $I_k(x, y)$ and point diffusion model $h(x, y)$;

Step S432: obtaining the intermediate variable $U_k(x, y)$ by dividing the sample image $I_0(x, y)$ by the convolution result;

Step S433: generating conjugate convolution between intermediate variables $U_k(x, y)$ and the point diffusion model $h(x, y)$;

Step S434: obtaining the evaluation result by multiplying the conjugate convolution with the intermediate image $I_k(x, y)$.

Wherein, $k$ is the number of iterations.

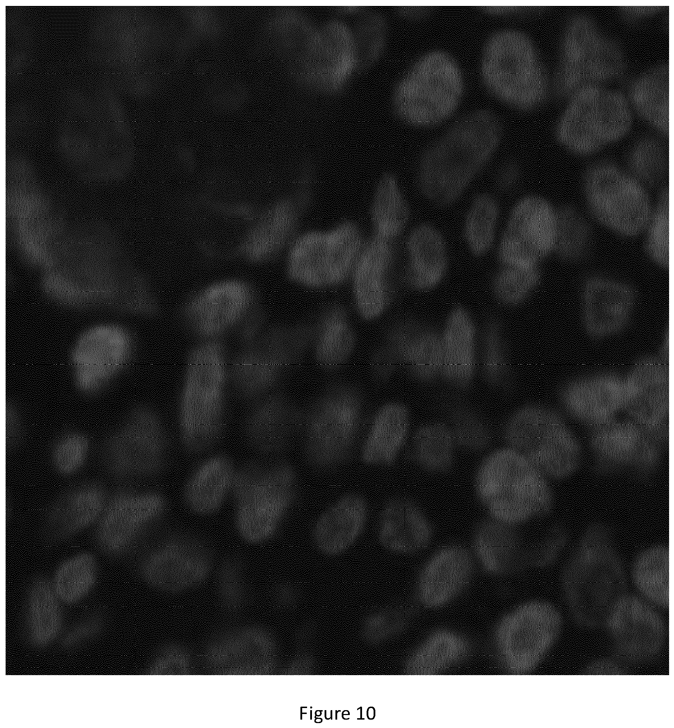

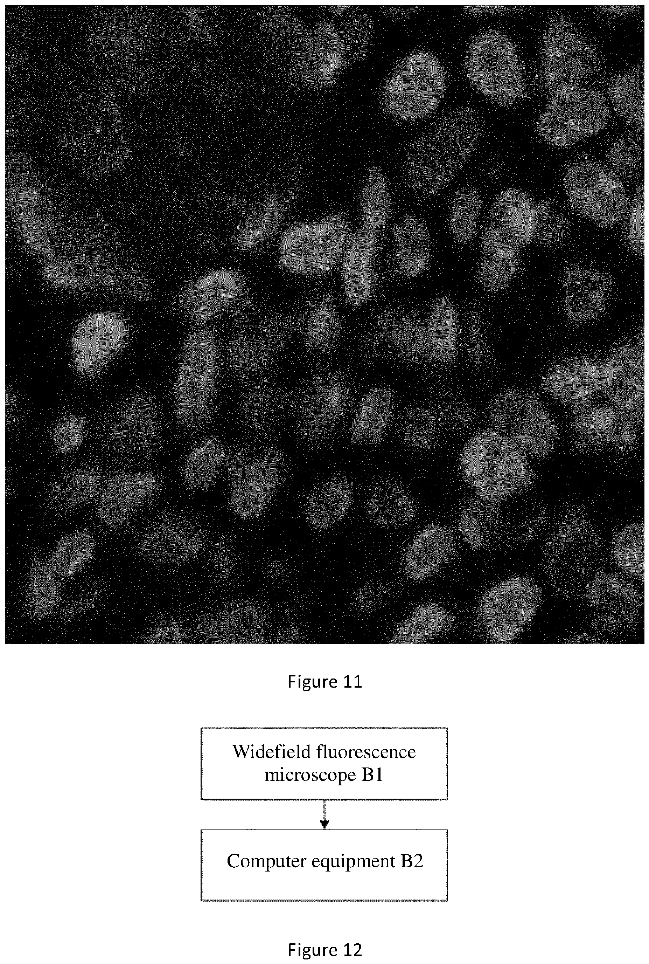

The above evaluation results can be further compared with the iterative condition to determine whether the image enhancement effect of the current point diffusion model meets the expectations. If not, return to step S42 until the image enhancement result reaches the desired goal. Since the increase in the number of iterations will affect the efficiency of image enhancement processing, the appropriate number of iterations should be selected under the trade-off between image quality and processing efficiency. For example, in one embodiment, Figure 10 is an input sample image, and Figure 11 is an enhanced image which is output after 10 iterations. Based on the comparison of Figures 10 and 11, it can be seen that the sharpness of the enhanced image is higher than that of the sample image.

A widefield fluorescence imaging system applying the image enhancement method described above, as shown in Figure 12, comprising:

the widefield fluorescence microscope B1, for collecting the sample image;

the computer equipment B2, the computer equipment B2 is connected to a widefield fluorescence microscope, and the computer equipment receives the sample image and processes the sample image based on the image enhancement method to obtain the enhanced image.

Specifically, in order to achieve a better imaging effect, in the present embodiment, the processing module B2 is provided to connect to the collection module B1 and to receive the fluorescence images. Subsequently, the processing module B2 uses a pre-generated point diffusion model to process the fluorescence image output on the left side of Figure 10, to obtain the enhanced image shown on the right side of Figure 10, which achieves a better image processing effect. Before processing fluorescence images, as the processing module B2 has previously adopted the above construction method to generate a point diffusion model, it can achieve better processing efficiency than existing technologies.

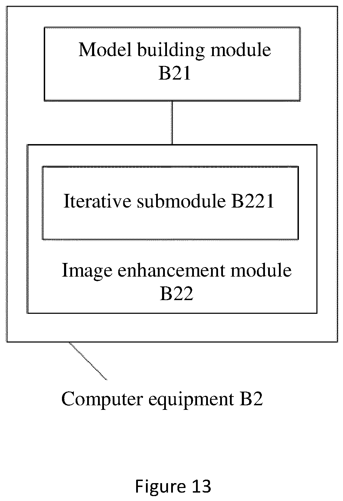

In one embodiment, as shown in Figure 13, the computer equipment B2 comprises:

model building module B21, model building module B21 constructs a point diffusion model according to the microsphere image collected by the widefield fluorescence microscopy;

image Enhancement Module B22, image enhancement module B22 is connected to the model building module B21, and the image enhancement module B 12 processes the sample image according to the point diffusion model to obtain the enhanced image.

The image enhancement module B22 is provided with an iterative submodule B221, and the iteration submodule B221 iterates the sample image according to the point diffusion model, so as to obtain the enhanced image.

Specifically, in order to achieve a better image enhancement effect, in the present embodiment, by configuring the corresponding computer program in the computer equipment B2 to construct the model building module B21, the image enhancement module B22 and the iteration submodule B221, so that the computer equipment B2 can construct a point diffusion function through the microsphere image introduced by the widefield fluorescence microscope B2 before taking a sample image. When the actual sample image is transmitted, the computer equipment can iteratively process the sample image using the iterative submodule B221 according to the point diffusion model, to obtain the enhanced image.

The above is only a better embodiment of the present invention, not to limit the embodiment of the present invention and the scope of protection, for those skilled in the art, should be able to realize that all equivalent substitutions and obvious changes made by the description and illustration of the present invention should be included in the scope of protection of the present invention.

**Claims**

1.  An image enhancement method for widefield fluorescence imaging system comprising a widefield fluorescence microscope and a computer equipment connected to the widefield fluorescence microscope, the method comprising:

    arranging fluorescent microspheres on an image plane of the widefield fluorescence microscope, and collecting, by the widefield fluorescence microscope, the microsphere image of the fluorescent microspheres;
    processing, by the computer equipment, the microsphere image, to obtain the half-peak full width value of the fluorescent microspheres;
    constructing a point diffusion model based on the half-peak full width value in the computer equipment;
    collecting a sample image by the widefield fluorescence microscope, and then processing, by the computer equipment, the sample image based on the point diffusion model to obtain an enhanced image.

2.  The image enhancement method according to claim 1, wherein before arranging the fluorescent microspheres, the widefield fluorescence microscope collects a background image on the image plane;
    after collecting, by the widefield fluorescence microscope, the microsphere image, the computer equipment outputs the microsphere image after noise removal based on the background image.

3.  The image enhancement method according to claim 1, wherein in the process of collecting microsphere image by the widefield fluorescence microscope, the widefield fluorescence microscope collects a plurality of fluorescence images on the fluorescent microspheres in turn;

    the computer equipment receives each of the fluorescence images in turn;
    the computer equipment averages all of the fluorescence images and outputs them to function as the microsphere image.

4.  The image enhancement method according to claim 1, wherein the process of processing the microsphere image by the computer equipment further comprises:

    performing morphological processing, by the computer equipment, on the microsphere image to obtain a preprocessed image;
    screening, by the computer equipment, the fluorescent microspheres from the preprocessed image, to obtain target microspheres;
    generating, by the computer equipment, the half-peak full width value according to the image data of the target microspheres.

5.  The image enhancement method according to claim 4, wherein the process of screening, by the computer equipment, the fluorescent microspheres further comprises:

    performing, by the computer equipment, a detection of connectivity domain on the preprocessed image to obtain a plurality of connectivity domains, and removing, according to the connectivity domain, the adjacent fluorescent microspheres;
    generating, by the computer equipment, a roundness of each of the fluorescent microspheres after screening;
    comparing, by the computer equipment, the roundnesses with a preset roundness threshold to remove the fluorescent microspheres whose roundness is less than the roundness threshold;

outputting, by the computer equipment, the screened fluorescent microspheres to function as the target microspheres.

6. The image enhancement method according to claim 3, wherein the process of generating the half-peak full width value by the computer equipment according to the image data comprises:

performing, by the computer equipment, a nonlinear least squares fitting to the image data of each of the target microspheres to obtain the half-peak full width value of the fluorescent microspheres;

averaging, by the computer equipment, all of the half-peak full width value of the fluorescent microspheres to obtain the half-peak full width value.

7. The image enhancement method according to claim 1, wherein the process of processing the sample image by the computer equipment comprises:

processing, by the computer equipment, the sample image based on the point diffusion model to obtain an intermediate image of this iteration;

generating, by the computer equipment, an evaluation result of this iteration according to the intermediate image, the point spread function, and the sample image;

determining, by the computer equipment, whether the intermediate image meets a preconfigured iteration condition;

if yes, outputting, by the computer equipment, the intermediate image to function as the enhanced image;

If not, processing, by the computer equipment, the intermediate image based on the point diffusion model to obtain an intermediate image of next iteration.

8. A widefield fluorescence imaging system applying the image enhancement method according to any of claims 1-7, comprising:

the widefield fluorescence microscope for collecting the sample image;

the computer equipment connected to the widefield fluorescence microscope, the computer equipment receives the sample image and processes the sample image based on the image enhancement method to obtain the enhanced image.

9. The widefield fluorescence imaging system according to claim 8, wherein the computer device comprises:

a model building module, the model building module constructs the point diffusion model according to the microsphere image collected by the widefield fluorescence microscope;

the image enhancement module, the image enhancement module is connected to the model building module, and the image enhancement module processes the sample image according to the point diffusion model to obtain the enhanced image.

10. The widefield fluorescence imaging system according to claim 9, wherein the image enhancement module is provided with an iterative submodule, the iterative submodule iterates the sample image according to the point diffusion model, to obtain the enhanced image.

101                                          102

Figure 1

Step S1: arranging fluorescent microspheres on an image plane of wide field fluorescence microscopy, and collecting, by the widefield fluorescence microscopy, the microsphere image of the fluorescent ⟶ S1

Step S2: processing, by the computer equipment, the microsphere image, to obtain the half-peak full width value of the fluorescent microspheres ⟶ S2

Step S3: constructing a point diffusion model based on the half-peak full width value in a computer equipment ⟶ S3

Step S4: collecting a sample image by the widefield fluorescence microscope, and then processing, by the computer equipment, the sample images based on the point diffusion model to obtain an enhanced image ⟶ S4

Figure 2

Objective A5

Immersion layer A4

Coverslip    A3

Sample layer A2

Slide      A1

Figure 3

S11

Step S11: widefield fluorescence microscopy collects a plurality of fluorescence images on the fluorescent microspheres in turn

S12

Step S12: the computer equipment receives each of the fluorescence images in turn

S13

Step S13: the computer equipment averages all of the fluorescence images and outputs a microsphere image

Figure 4

Step S21: performing morphological processing, by the computer equipment, on the microsphere image to obtain the preprocessed image — S21

Step S22: screening, by the computer equipment, the fluorescent microsphere from the preprocessed image, to obtain the target microspheres — S22

Step S23: generating, by the computer equipment, a half-peak full width value based on the image data of the target microsphere — S23

Figure 5

S221

Step S221: performing, by the computer equipment, a detection of connectivity domain on the preprocessed image to obtain a plurality of connectivity domains, and removing, according to the connectivity domain, the adjacent fluorescent microspheres

S222

Step S222: generating, by the computer equipment, the roundness of each of the fluorescent microspheres after screening respectively

S223

Step S223: comparing, by the computer equipment, the roundnesses with a pre-set roundness threshold to remove fluorescent microspheres whose roundness is less than the roundness threshold

S224

Step S224: outputting, by the computer equipment, the screened fluorescent microspheres to function as target microspheres

Figure 6

S231

Step S231: performing, by the computer equipment, a nonlinear least squares fitting to the image data of each of the target microspheres to obtain the half-peak full width value of the fluorescent microspheres

S232

Step S232: averaging, by the computer equipment, all of the half-peak full width value of the fluorescent microspheres to obtain the half-peak full width value

Figure 7

S42

Step S41: processing, by the computer equipment, the sample image based on the point diffusion model to obtain an intermediate image of this iteration

S43

Step S42: generating, by the computer equipment, an evaluation result of this iteration according to the intermediate images, the point diffusion model and the sample image

S44

Step S43: determining, by the computer equipment, whether the intermediate image meets a preconfigured iteration condition

NO

whether the intermediate image meets the iteration conditions

YES

outputting an intermediate image of this iteration to function as an enhanced image

Figure 8

Step S431: generating the convolution results between the intermediate image and the point diffusion model

— S431

Step S432: obtaining the intermediate variable by dividing the sample image by the convolution result

— S432

Step S433: generating conjugate convolution between intermediate variables and the point diffusion model

— S433

Step S434: obtaining the evaluation result by multiplying the conjugate convolution with the intermediate image

— S434

Figure 9

Figure 10

Figure 11

Figure 12

Model building module
B21

Iterative submodule B221

Image enhancement module
B22

Computer equipment B2

Figure 13

**EP 4 432 216 A1**

EUROPEAN SEARCH REPORT

Application Number

EP 23 02 0304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Lu Weimin ET AL: "An optimized model of point spread function of microscopy based on fluorescence beads", LASER TECHNOLOGY, 25 September 2016 (2016-09-25), pages 638-642, XP093100991, DOI: 10.7510/jgjs.issn.1001-3806.2016.05.005 Retrieved from the Internet: URL:http://www.jgjs.net.cn/article/doi/10.7510/jgjs.issn.1001-3806.2016.05.005 [retrieved on 2023-11-14] | 1,3,6-10 | INV. G06T5/00 G06T5/20 G06T5/30 G06T7/00 G06T7/64 ADD. G01N21/64 G02B21/00 |
| Y | * the whole document * ----- | 2,4,5 | |
| Y | CN 108 088 660 A (UNIV TSINGHUA) 29 May 2018 (2018-05-29) | 2,4,5 | |
| A | * paragraph [0035] - paragraph [0085] * ----- | 1,3,6-10 | |
| A | Anonymous: "Richardson-Lucy deconvolution - Wikipedia", , 21 December 2020 (2020-12-21), XP055781614, Retrieved from the Internet: URL:https://en.wikipedia.org/w/index.php?title=Richardson-Lucy_deconvolution&oldid=995434606 [retrieved on 2021-03-03] * abstract * ----- -/-- | 1-10 | |

| | TECHNICAL FIELDS SEARCHED (IPC) |
|---|---|
| | G06T G01N G02B |

The present search report has been drawn up for all claims

| Place of search | Date of completion of the search | Examiner |
|---|---|---|
| Munich | 14 November 2023 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

**EP 23 02 0304**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | David S.C. Biggs: "3D Deconvolution Microscopy" In: "Current Protocols in Cytometry", 1 April 2010 (2010-04-01), John Wiley & Sons, Inc., Hoboken, NJ, USA, XP055030709, ISBN: 978-0-47-114295-9 DOI: 10.1002/0471142956.cy1219s52, * abstract * * page 7 - page 11 * | 1-10 | |
| A | SCHROPP MARTIN ET AL: "XL-SIM: Extending Superresolution into Deeper Layers", PHOTONICS, vol. 4, no. 4, 20 December 2017 (2017-12-20), page 33, XP055780675, DOI: 10.3390/photonics4020033 * 2 * | 1-10 | |

TECHNICAL FIELDS
SEARCHED (IPC)

The present search report has been drawn up for all claims

| Place of search | Date of completion of the search | Examiner |
|---|---|---|
| Munich | 14 November 2023 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 02 0304

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2023

| Patent document cited in search report | Publication date | Patent family member(s) | Publication date |
|---|---|---|---|
| CN 108088660 A | 29-05-2018 | NONE | |

For more details about this annex : see Official Journal of the European Patent Office, No. 12/82

EPO FORM P0459

**EP 4 432 216 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711352724